# EUROPEAN PATENT APPLICATION

(11) **EP 4 786 685 A1**
(43) Date of publication of application: **05.08.2026**
(21) Application number: 24871330.7
(22) Date of filing: 08.04.2024
(51) Int. Cl.: E02F 9/00, B60K 1/04, H02J 7/00

(54) **ELECTRIC CONSTRUCTION MACHINE**

(30) Priority: 26.09.2023 JP 2023164031
(71) Applicant: Hitachi Construction Machinery Tierra Co., Ltd., Shiga 528-0061, (JP)
(72) Inventor: MORI, Kazushige, Koka-shi, Shiga 528-0061 (JP); INOUE, Ryoya, Koka-shi, Shiga 528-0061 (JP); KAWAGUCHI, Hiroshi, Koka-shi, Shiga 528-0061 (JP); TAKAHASHI, Kiwamu, Koka-shi, Shiga 528-0061 (JP)
(74) Representative: MERH-IP Matias Erny Reichl Hoffmann Patentanwälte PartG mbB
(86) International application number: PCT/JP2024/014324
(87) International publication number: WO 2025/069514

(57) **Abstract**

The present invention aims to provide a construction machine capable of achieving both operability and operating time. To achieve this, in an electric construction machine equipped with an operation device for instructing the operation of a hydraulic actuator, a motor rotation speed setting device for instructing a rotation speed of the electric motor, and a controller for controlling the rotation speed of the electric motor, the controller reduces the rotation speed of the electric motor from the instructed rotation speed indicated by the motor rotation speed setting device to an idle rotation speed determined according to the charge rate of the battery when the non-operation state of the operation device continues for a certain period of time.

## Description

### Technical Field

The present invention relates to an electric construction machine such as a hydraulic excavator.

### Background Art

Many construction machines such as hydraulic excavators use diesel engines as a power source, and perform work by operating hydraulic actuators with pressure oil sent from a hydraulic pump connected to the diesel engine. However, in recent years, from the perspective of improving fuel efficiency, exhaust characteristics, and reducing noise, an electric construction machine such as an electric hydraulic excavator has been developed and put into practical use, which are equipped with batteries and use electric motors as a power source instead of a diesel engine, with these batteries serving as the power supply source for the electric motors.

Additionally, many of the above-mentioned construction machines such as hydraulic excavators implement a function (auto-idle) to switch from normal operation to idle operation to improve fuel efficiency by reducing the engine speed to a predetermined low speed. As prior art documents disclosing such conventional technologies for construction machinery, there is, for example, Patent Document 1.

### Prior Art Document

### Patent Documents

Patent Document 1: Japanese Patent Publication No. S60-038561B

### Summary of the Invention

### Problem to be Solved by the Invention

In the electric construction machine such as the electric hydraulic excavator as described above, to reduce the power consumption of the electric motor, it is preferable to implement a function (auto-idle) that controls the motor rotation speed to a predetermined speed (idle speed) lower than the speed indicated by the speed input device (e.g., motor rotation speed dial) when all operation devices (e.g., control levers) instructing the operation of the hydraulic actuator are held in a neutral position for a predetermined time after the operator sets the target speed of the electric motor by operating the speed input device.

However, when conventional auto-idle is implemented in the electric construction machine, the following issues arise. In conventional auto-idle, since the idle speed is constant, if the idle speed is set low, the operation response time upon returning from the auto-idle state becomes longer, reducing the operability of the electric construction machine. Conversely, if the idle speed is set high, the battery power consumption increases, and the operating time of the electric construction machine becomes shorter.

The present invention has been made in view of the above issues, and its purpose is to provide an electric construction machine capable of achieving both operability and operating time.

### Means for Solving the Problem

To achieve the above objective, the present invention provides a construction machinery equipped with: a battery; an electric motor configured to be driven by electric power supplied from the battery; a hydraulic pump configured to be driven by the electric motor; a hydraulic actuator configured to be driven by pressurized oil supplied from the hydraulic pump; an operation device indicating an operation of the hydraulic actuator; a motor rotation speed setting device indicating a rotation speed of the electric motor; and a controller controlling the speed of the electric motor, wherein the controller is configured to make the speed of the electric motor reduce, from the indicated rotation speed set by the motor rotation speed setting device, to an idle speed set according to the battery's state of charge if a non-operating state of the operation device is maintained for a predetermined period of time.

### Advantages of the Invention

According to the electric construction machine of the present invention, by reducing the speed of the electric motor from the indicated speed to the idle speed when the operation device remains in a non-operating state for a certain period, it is possible to suppress the power consumption of the battery, thereby extending the operating time of the electric construction machine. Additionally, by adjusting the idle speed according to the battery's state of charge (SOC), it is possible to shorten the time for the electric motor rotation speed to return from the idle speed to the indicated speed when the operation device resumes operation, thereby suppressing the decline in operability of the electric construction machine.

### Brief Description of the Drawings

[Fig. 1] Side view of an electric hydraulic excavator according to an embodiment of the present invention
[Fig. 2] Top view of an electric hydraulic excavator according to an embodiment of the present invention
[Fig. 3] Configuration diagram of the drive system of an electric hydraulic excavator according to an embodiment of the present invention
[Fig. 4] Flowchart showing the process related to the auto-idle of the controller in an embodiment of the present invention
[Fig. 5] Block diagram showing the functions related to the auto-idle of the controller in an embodiment of the present invention
[Fig. 6] Diagram showing the relationship between the SOC of the battery and the idle speed in an embodiment of the present invention

### Mode for Carrying Out the Invention

Hereinafter, embodiments of the present invention will be described with reference to the drawings. In the drawings, equivalent members are denoted by the same reference numerals, and redundant descriptions are omitted as appropriate.

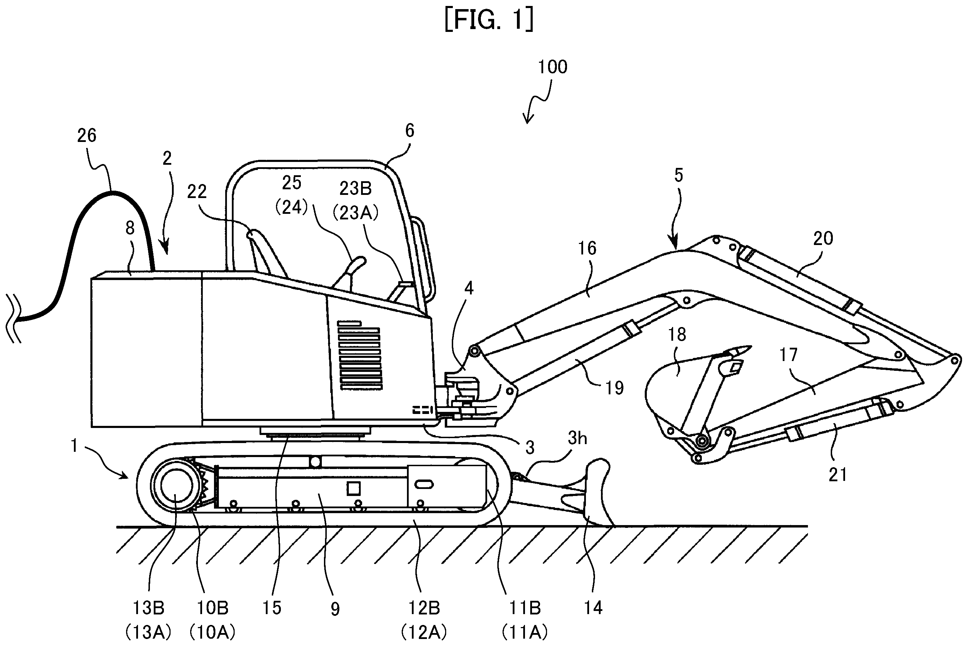

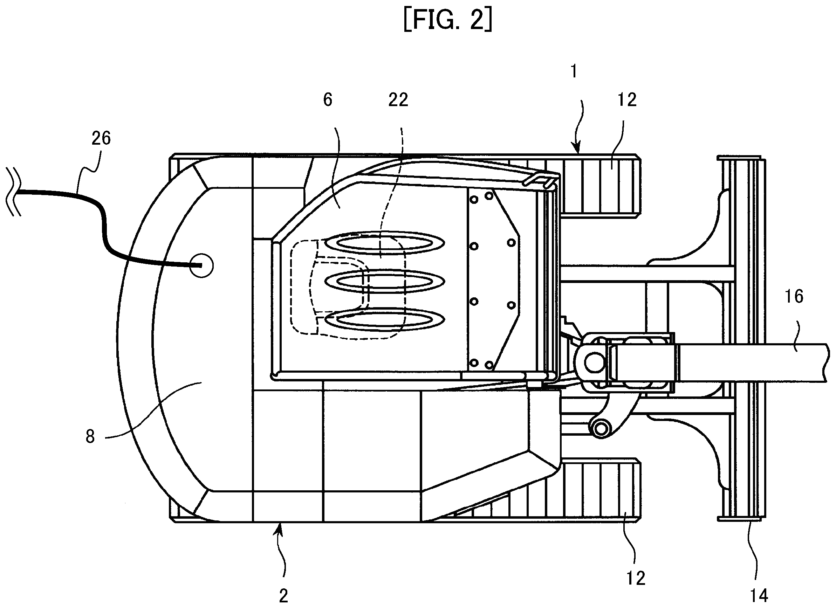

FIG. 1 is a side view of the electric hydraulic excavator in this embodiment, and FIG. 2 is a top view thereof. It should be noted that the application of the present invention is not limited to electric hydraulic excavators and can be applied to electric construction machine in general.

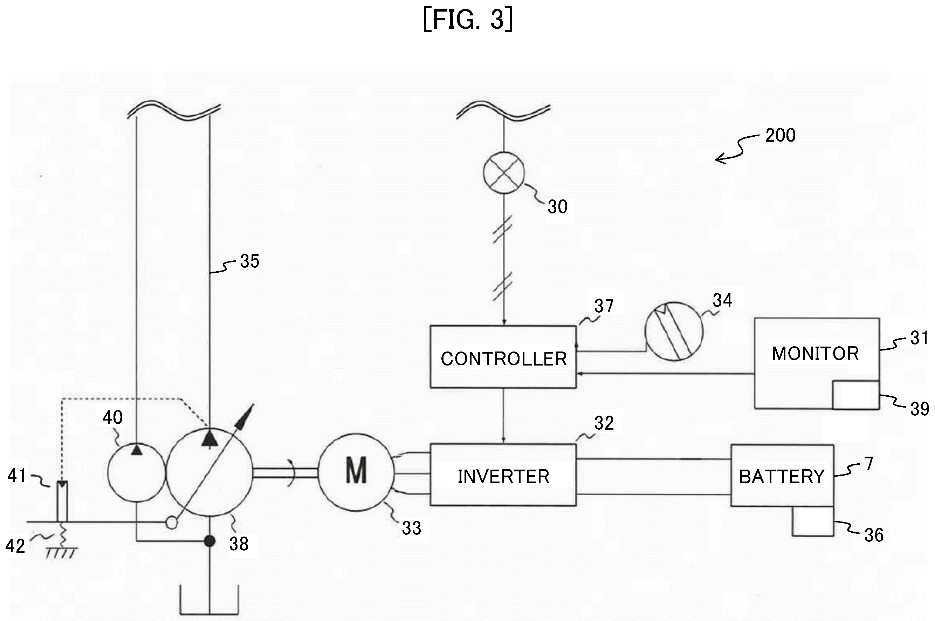

In FIGS. 1 and 2, the electric hydraulic excavator 100 includes a crawler-type lower travel body 1, an upper swing body 2 rotatably provided on the lower travel body 1, and a working device 5. The upper swing body 2 includes a swing frame 3 forming a basic lower structure and a swing post 4 provided on the front side of the swing frame 3 so as to be rotatable in the left-right direction. The working device 5 is connected to the swing post 4 so as to be rotatable in the vertical direction. On the front side of the swing frame 3, a canopy-type operator's cabin 6 is provided. On the rear side of the swing frame 3, a drive battery unit mounting section 8 for housing a battery 7 (shown in FIG. 3) is provided. The drive battery unit mounting section 8 can be connected to an external power source (not shown) via an external power connection cable 26. The electric hydraulic excavator 100 is driven by power supplied from the battery 7 or an external power source.

The lower travel body 1 includes a track frame 9 having a substantially H-shape when viewed from above, left and right drive wheels 10A, 10B rotatably supported near the rear ends on both sides of the track frame 9, left and right idler wheels 11A, 11B rotatably supported near the front ends on both sides of the track frame 9, and left and right crawlers 12A, 12B wrapped around the drive wheels 10A, 10B and idler wheels 11A, 11B, respectively. The left drive wheel 10A (i.e., the left crawler 12A) is rotated by the drive of the left travel hydraulic motor 13A, and the right drive wheel 10B (i.e., the right crawler 12B) is rotated by the drive of the right travel hydraulic motor 13B.

On the front side of the track frame 9, a blade 14 for dozing is provided so as to be movable up and down. The blade 14 moves up and down by the expansion and contraction drive of a blade hydraulic cylinder (not shown).

A swing wheel 15 is provided at the center of the track frame 9. The swing frame 3 is rotatably provided via the swing wheel 15. The swing frame 3 (i.e., the upper swing body 2) swings by the drive of a swing hydraulic motor (not shown).

The swing post 4 is provided on the front side of the swing frame 3 so as to be rotatable in the left-right direction, and rotates in the left-right direction by the expansion and contraction drive of a swing hydraulic cylinder (not shown). As a result, the working device 5 swings left and right.

The working device 5 includes a boom 16 rotatably connected to the swing post 4 in the vertical direction, an arm 17 rotatably connected to the tip part of the boom 16 in the vertical direction, and a bucket 18 rotatably connected to the tip part of the arm 17 in the vertical direction. The boom 16, arm 17, and bucket 18 rotate in the vertical direction by a boom hydraulic cylinder 19, an arm hydraulic cylinder 20, and a bucket hydraulic cylinder 21. The bucket 18 can be replaced with an attachment (not shown) incorporating a hydraulic actuator for options, for example.

In the operator's cabin 6, an operator's seat (seat) 22 for the operator to sit is provided. In front of the operator's seat 22, a left travel operation lever 23A and a right travel operation lever 23B are provided as operation devices for indicating the operation of the left and right travel hydraulic motors 13A, 13B (i.e., the left and right crawlers 12A, 12B) by operating in the longitudinal direction. Further to the left of the left travel operation lever 23A, an optional operation pedal (not shown) is provided at the foot area for indicating the operation of a hydraulic actuator for options (i.e., attachment) by operating in the left-right direction. Further to the right of the right travel operation lever 23B, a swing operation pedal (not shown) is provided at the foot area as an operation device for indicating the operation of a swing hydraulic cylinder (i.e., swing post 4) by operating in the left-right direction.

On the left side of the operator's seat 22, a cross-operation type arm/swing operation lever 24 is provided as an operation device for indicating the operation of the arm hydraulic cylinder 20 (i.e., arm 17) by operating in the longitudinal direction and the operation of the swing hydraulic motor (i.e., upper swing body 2) by operating in the left-right direction. On the right side of the operator's seat 22, a cross-operation type boom/bucket operation lever 25 is provided as an operation device for indicating the operation of the boom hydraulic cylinder 19 (i.e., boom 16) by operating in the longitudinal direction and the operation of the bucket hydraulic cylinder 21 (i.e., bucket 18) by operating in the left-right direction. Additionally, on the right side of the operator's seat 22, a blade operation lever (not shown) is provided as an operation device for indicating the operation of the blade hydraulic cylinder (i.e., blade 14) by operating in the longitudinal direction.

FIG. 3 is a configuration diagram of the drive system of the electric hydraulic excavator 100. The drive system 200 includes an electric motor 33 as a power source, a variable displacement hydraulic pump 38 driven by the electric motor 33, and a fixed displacement pilot pump 40.

The hydraulic actuators 13A, 13B, 19-21 are driven by the pressure oil discharged from the hydraulic pump 38. The flow (direction and flow rate) of the pressure oil supplied from the hydraulic pump 38 to each hydraulic actuator 13A, 13B, 19-21 is controlled by a directional control valve (not shown). Each directional control valve is operated by the pilot pressure output from each control lever 23A, 23B, 24, 25. Each control lever 23A, 23B, 24, 25 is equipped with a pilot valve that generates pilot pressure according to the lever tilt amount, using the discharge pressure (pilot primary pressure) of the pilot pump 40 as the base pressure.

The hydraulic pump 38 is provided with a regulator piston 41 and a spring 42 opposing the regulator piston 41. The pressure of the pressure oil supply path 35, to which the pressure oil discharged from the hydraulic pump 38 is supplied, is directed to the regulator piston 41. As a result, if the pressure of the pressure oil supply path 35 increases, the tilt of the hydraulic pump 38 decreases, reducing the absorbed power of the hydraulic pump 38.

The electric motor 33 is electrically connected to the inverter 32 via a high-voltage cable. The inverter 32 is electrically connected to the battery 7 via a high-voltage cable. The inverter 32 converts the high-voltage direct current input from the battery 7 into high-voltage alternating current and outputs it to the electric motor 33, controlling a rotation speed of the electric motor 33.

The battery 7 is equipped with a battery control controller 36. The battery control controller 36 controls the battery 7 and acquires the SOC (State of Charge) of the battery 7.

The monitor 31 is installed in the operator's cabin 6 and displays various information related to the electric hydraulic excavator 100 according to the operator's operation.

The motor rotation speed setting device 34 is installed in the operator's cabin 6 and indicates the controller 37 on the rotation speed (commanded speed) of the electric motor 33 according to the operator's operation.

The auto-idle switch 39 is installed on the monitor 31 and indicates the controller 37 whether to enable auto-idle according to the operator's operation. An auto-idle is a function that reduces the rotation speed of the electric motor 33 to a predetermined low speed (idle speed) regardless of the indication from the motor rotation speed setting device 34 if all control levers 23A, 23B, 24, 25 remain in the neutral position for a certain period. Hereinafter, the operating state of the electric hydraulic excavator 100 executing auto-idle is referred to as the auto-idle state, and other operating states are referred to as the normal state.

The hydraulic sensor 30 converts the pilot pressure output from each control lever 23A, 23B, 24, 25 into an analog signal and outputs it to the controller 37.

The controller 37 calculates the motor rotation speed command value of the electric motor 33 based on signals from the motor rotation speed setting device 34, the auto-idle switch 39, and the hydraulic sensor 30, and outputs it to the inverter 32.

The inverter 32 controls the rotation speed of the electric motor 33 according to the motor rotation speed command value input from the controller 37.

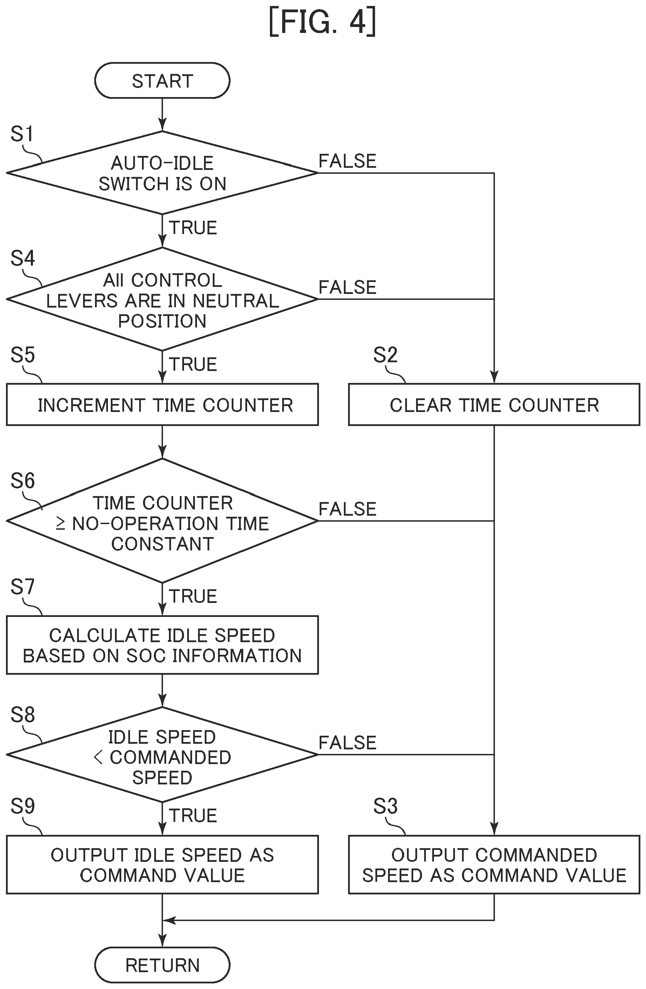

FIG. 4 is a flowchart showing the processing related to the auto-idle of the controller 37. The controller 37 executes the processing shown in FIG. 4 at a predetermined calculation cycle regardless of the connection status of the external power connection cable 26 (shown in FIG. 1 or FIG. 2).

The controller 37 first determines whether the auto-idle switch 39 is ON (step S1).

If the determination result of step S1 is FALSE, the variable (time counter) representing the duration of the state where the auto-idle switch 39 is ON and all control levers 23A, 23B, 24, 25 are in the neutral position is cleared (reset to zero) (step S2). Following step S2, the motor rotation speed (commanded speed) indicated by the motor rotation speed setting device 34 is output to the inverter 32 as a command value (step S3), and the flow is terminated. As a result, if the auto-idle switch 39 is OFF, the motor rotation speed is controlled to the commanded speed.

If the determination result of step S1 is TRUE, it is determined whether all control levers are in the neutral position (step S4). If the determination result of step S4 is FALSE, proceed to step S2.

If the determination result of step S4 is TRUE, the time counter is incremented (step S5).

Following step S5, it is determined whether the time counter is equal to or greater than the no-operation time constant (e.g., 5 minutes) (step S6). If the determination result of step S6 is FALSE, proceed to step S3.

If the determination result of step S6 is TRUE, the idle speed is calculated based on the SOC (step S7).

Following step S7, it is determined whether the idle speed is less than the commanded speed (step S8). If the determination result of step S8 is FALSE, proceed to step S3. As a result, if the commanded speed is less than the idle speed, the motor rotation speed is maintained at a commanded speed lower than the idle speed, thereby suppressing the power consumption of the battery 7 compared to when controlled to the idle speed.

If the determination result of step S8 is TRUE, the idle speed is output as a command value to the inverter 32 (step S9), and the flow is terminated. As a result, the motor rotation speed decreases to the idle speed, and the power consumption of the battery 7 is suppressed.

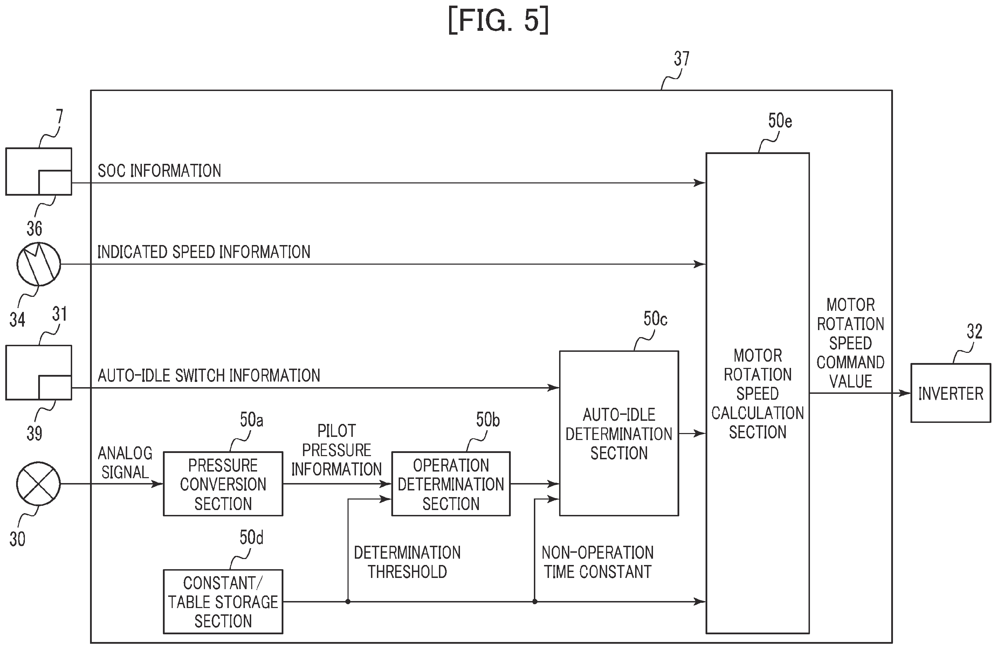

FIG. 5 is a block diagram showing the functions related to the auto-idle of the controller 37. The controller 37 includes a pressure conversion section 50a, an operation determination section 50b, an auto-idle determination section 50c, a constant/table storage section 50d, and a motor rotation speed calculation section 50e. The controller 37 is equipped with a CPU or other processing device, ROM and RAM or other storage devices, and an input/output interface for signal input and output with external devices, and realizes the functions of each part by executing programs stored in ROM, etc. Note that in FIG. 5, functions related to control other than the electric motor 33 are omitted from illustration.

The pressure conversion section 50a converts the analog signals input from the hydraulic sensor 30 into pilot pressure information for each control lever 23A, 23B, 24, 25 and outputs it.

The operation determination section 50b determines the presence or absence of operation of the control levers 23A, 23B, 24, 25 based on the pilot pressure information input from the pressure conversion section 50a and outputs the determination result. Specifically, it determines by comparing the determination threshold stored in the constant/table storage section 50d with the pilot pressure information calculated by the pressure conversion section 50a.

The auto-idle determination section 50c determines whether the electric hydraulic excavator 100 is in an auto-idle state based on the information input from the auto-idle switch 39 (auto-idle switch information), the determination result input from the operation determination section 50b, and the non-operation time constant input from the constant/table storage section 50d, and outputs the determination result. Specifically, it determines an auto-idle state if the auto-idle switch 39 is ON and the determination result of the operation determination section 50b is a non-operation state (all control levers 23A, 23B, 24, 25 are in the neutral position) that continues for a period equal to or longer than the non-operation time constant, otherwise it determines a normal state.

The motor rotation speed calculation section 50e calculates the motor rotation speed based on the SOC information of the battery 7 input from the battery control controller 36, the indicated speed information input from the motor rotation speed setting device 34, and the determination result input from the auto-idle determination section 50c. Specifically, if the determination result input from the auto-idle determination section 50c is an auto-idle state, the idle speed is calculated based on the SOC information, and if the calculated idle speed is lower than the motor rotation speed indicated by the motor rotation speed setting device 34 (indicated speed), the idle speed is output as the motor rotation speed command value to the inverter 32, and if the idle speed is equal to or higher than the indicated speed, the indicated speed is output as the motor rotation speed command value. If the determination result input from the auto-idle determination section 50c is a normal state, the indicated speed is output as the motor rotation speed command value to the inverter 32.

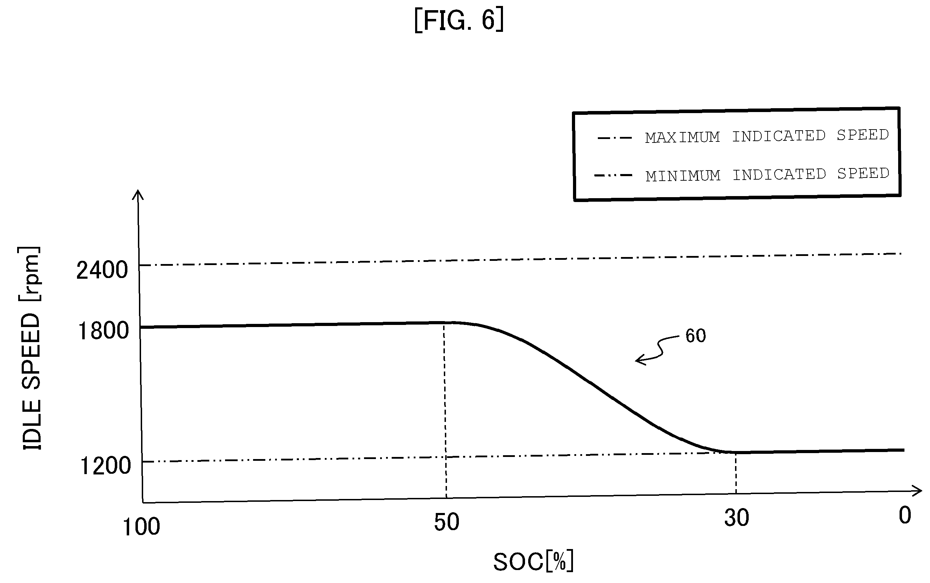

FIG. 6 is a diagram showing the relationship between the SOC of the battery 7 and the idle speed (SOC-idle speed table). The SOC-idle speed table 60 is stored in the constant/table storage section 50d and is referenced by the motor rotation speed calculation section 50e when calculating the idle speed based on the SOC. In the example shown in FIG. 6, when the SOC is 50% (first threshold) or more, the idle speed is constant at 1800 rpm. When the SOC is 30% (second threshold) or less, the idle speed is constant at 1200 rpm. When the SOC is between 50% and 30%, the idle speed continuously decreases from 1800 rpm to 1200 rpm as the SOC decreases.

The upper limit of the idle speed (1800 rpm) is set between the maximum indicated speed (2400 rpm) and the minimum indicated speed (1200 rpm). The lower limit of the idle speed (1200 rpm) is set to be the same as the minimum indicated speed (1200 rpm). The minimum indicated speed is equal to the minimum value of the allowable speed range of the hydraulic pump 38.

As shown in FIG. 6, when the SOC is high, not lowering the idle speed more than necessary makes it possible to improve the operability of returning from the auto-idle state. Additionally, by lowering the idle speed as the SOC decreases, the power consumption of the battery 7 is suppressed, making it possible to extend the battery 7's duration.

In the SOC-idle speed table 60 of this embodiment, sections where the idle speed is constant regardless of the SOC (SOC is 50% or more or 30% or less) are provided, but the idle speed may be proportionally decreased from the upper limit (1800 rpm) to the lower limit (1200 rpm) according to the SOC. In this embodiment, the idle speed remains constant at the upper limit (1800 rpm) until the SOC falls below 50%, which improves the operability when returning from the auto-idle state compared to when the idle speed is proportionally decreased according to the SOC. Additionally, when the SOC falls below 30%, the idle speed remains constant at the lower limit (1200 rpm), which extends the battery 7's duration compared to when the idle speed is proportionally decreased according to the SOC.

### (SUMMARY)

In this embodiment, the electric construction machine 100 is equipped with a battery 7, an electric motor 33 driven by the power supplied from the battery 7, a hydraulic pump 38 driven by the electric motor 33, hydraulic actuators 13A, 13B, 19-21 driven by the pressure oil supplied from the hydraulic pump 38, operation devices 23A, 23B, 24, 25 that indicate the operation of the hydraulic actuators 13A, 13B, 19-21, a motor rotation speed setting device 34 that indicates the rotation speed of the electric motor 33, and a controller 37 that controls the rotation speed of the electric motor 33. The controller 37 reduces the rotation speed of the electric motor 33 from the indicated rotation speed indicated by the motor rotation speed setting device 34 to an idle rotation speed determined according to the charge rate of the battery 7 if the non-operation state of the operation devices 23A, 23B, 24, 25 continues for a certain period.

According to this embodiment configured as described above, by reducing the rotation speed of the electric motor 33 from the indicated rotation speed to the idle rotation speed if the non-operation state of the operation devices 23A, 23B, 24, 25 continues for a certain period, it is possible to suppress the power consumption of the battery 7, thereby extending the operating time of the electric construction machine 100. Furthermore, by adjusting the idle rotation speed according to the state of charge (SOC) of the battery 7, it is possible to shorten the time until the rotation speed of the electric motor 33 returns from the idle rotation speed to the indicated rotation speed if the operation of the operation devices 23A, 23B, 24, 25 is resumed, thereby suppressing the decline in operability of the electric construction machine 100.

Additionally, in this embodiment, the controller 37 sets the idle rotation speed to the first rotation speed (1800 rpm) if the charge rate of the battery 7 is equal to or greater than the first threshold (50%), sets the idle rotation speed to the second rotation speed (1200 rpm), which is lower than the first rotation speed, if the charge rate of the battery 7 is less than the second threshold (30%) which is smaller than the first threshold, and monotonically decreases the idle rotation speed from the first rotation speed to the second rotation speed according to the decrease in the charge rate of the battery 7 if the charge rate is less than the first threshold and equal to or greater than the second threshold. As a result, the idle rotation speed remains constant at the first rotation speed (1800 rpm) until the SOC falls below the first threshold (50%), which improves operability upon returning from the auto-idle state compared to if the idle rotation speed is proportionally decreased according to the SOC. Furthermore, if the SOC falls below the second threshold (30%), the idle rotation speed remains constant at the second rotation speed (1200 rpm), which allows for better suppression of the battery 7's power consumption compared to if the idle rotation speed is proportionally decreased according to the SOC.

Additionally, in this embodiment, the controller 37 maintains the rotation speed of the electric motor 33 at the indicated rotation speed if the indicated rotation speed is less than the idle rotation speed. As a result, if the indicated rotation speed indicated by the motor rotation speed setting device 34 is lower than the idle rotation speed, the rotation speed of the electric motor 33 is controlled to the indicated rotation speed, which is lower than the idle rotation speed, thereby further suppressing the power consumption of the battery 7.

While the embodiments of the present invention have been described in detail above, the present invention is not limited to the embodiments described above and includes various modifications. For example, the embodiments described above are detailed to explain the present invention clearly and are not necessarily limited to including all the configurations described.

### Description of Reference Characters

1: Lower travel body
2: Upper swing body
3: Swing frame
4: Swing post
5: Working device
6: Operator's cabin
7: Battery
8: Drive battery unit mounting section
9: Track frame
10A, 10B: Drive wheels
11A, 11B: Idler wheels
12A, 12B: Crawlers
13A, 13B: Travel hydraulic motor (hydraulic actuator)
14: Blade
15: Swing wheel
16: Boom
17: Arm
18: Bucket
19: Boom hydraulic cylinder (hydraulic actuator)
20: Arm hydraulic cylinder (hydraulic actuator)
21: Bucket hydraulic cylinder (hydraulic actuator)
22: Operator's seat
23A, 23B: Travel operation lever (operation device)
24: Arm/swing operation lever (operation device)
25: Boom/bucket operation lever (operation device)
30: Hydraulic sensor
31: Monitor
32: Inverter
33: Electric motor
34: Motor rotation speed setting device
35: Pressure oil supply path
36: Battery control controller
37: Controller
38: Hydraulic pump
39: Auto-idle switch
40: Pilot pump
41: Regulator piston
42: Spring
50a: Pressure conversion section
50b: Operation determination section
50c: Auto-idle determination section
50d: Constant/table storage section
50e: Motor rotation speed calculation section
60: Idle speed table
100: Electric hydraulic excavator (electric construction machine)

## Claims

1. An electric construction machine comprising:
a battery;
an electric motor configured to be driven by electric power supplied from the battery;
a hydraulic pump configured to be driven by the electric motor;
a hydraulic actuator configured to be driven by pressurized oil supplied from the hydraulic pump;
an operation device for indicating an operation of the hydraulic actuator;
a motor rotation speed setting device for indicating a rotation speed of the electric motor; and
a controller for controlling the rotation speed of the electric motor, wherein
the controller is configured to make the rotation speed of the electric motor reduce, from an indicated rotation speed indicated by the motor rotation speed setting device, to an idle rotation speed set according to a charge rate of the battery if a non-operation state of the operation device is maintained for a predetermined period of time.

2. The electric construction machine according to claim 1, wherein
the controller is configured to:
set the idle rotation speed to a first rotation speed if the charge rate of the battery is equal to or greater than a first threshold;
set the idle rotation speed to a second rotation speed lower than the first rotation speed if the charge rate of the battery is less than a second threshold which is less than the first threshold; and
make the idle rotation speed monotonically decrease from the first rotation speed to the second rotation speed according to the decrease of the charge rate of the battery if the charge rate of the battery is less than the first threshold and equal to or greater than the second threshold.

3. The electric construction machine according to claim 1, wherein
the controller is configured to make the rotation speed of the electric motor maintains the indicated rotation speed if the indicated rotation speed is less than the idle rotation speed.
